# EUROPEAN PATENT SPECIFICATION

(11) **EP 3 350 399 B1**
(45) Date of publication and mention of the grant of the patent: **28.04.2021**
(21) Application number: 16720162.3
(22) Date of filing: 23.03.2016
(51) Int. Cl.: E05G 1/00, A45B 25/00, G09F 23/00

(54) **SAFETY BOX FOR THE TEMPORARY STORAGE OF VALUABLES WITH AN ELECTRONIC LOCK**
SICHERHEITSBEHÄLTER ZUR TEMPORÄREN AUFBEWAHRUNG VON WERTGEGENSTÄNDEN MIT ELEKTRONISCHEM SCHLOSS
BOITE DE SÉCURITÉ POUR LE STOCKAGE TEMPORAIRE DE VALEURS AVEC SERRURE ÉLECTRONIQUE

(30) Priority: 23.03.2015 GR 20150100136
(43) Date of publication of application: 25.07.2018
(73) Proprietor: Christodoulou Emmanouil & Co Limited Partnership, 14564 Kifisia Attikis (GR)
(72) Inventor: KOROMILIS, Ioannis, 14342 Nea Filadelfia Attikis (GR)
(74) Representative: Betten & Resch
(86) International application number: PCT/GR2016/000014
(87) International publication number: WO 2016/151344

(56) References cited:
- WO-A1-2013/073953
- WO-A1-2014/006161
- WO-A2-2010/030191
- DE-A1- 10 136 907
- DE-U1-202007 000 324
- US-A1- 2008 134 732

## Description

This invention regards a plastic safety box for the temporary storage of personal valuables, which is placed at areas of recreation such as beaches, hotels, pools etc. usually fit onto the mast of the umbrella and locks with an electronic lock. The box is accompanied by an electronic key-bracelet, which is suitable to be worn around the wrist, with a built-in electronic microcircuit (like a key) which controls (unlocks) the electronic lock.

Today in this sector, there are many respective implementations which satisfy the need for safekeeping of personal valuables. However, all of them work with only 2 ways of locking. Either with mechanical keys or a mechanical code/combination of 3 digits. There are many drawbacks in regards to the usability for the end user but also for the entrepreneur who uses them

They are placed on umbrellas by drilling holes and then securing them with screws. This leads to wear and possibly destruction of the umbrella mast. With this implementation, something like that is avoided due to the use of plastic clamps which cause no wear to the mast.

Due to the placement with metallic screws, it is possible and easy for the box not to be perfectly aligned with the mast creating a bad optical effect. With the present implementation, due to the way it is clamped to the mast of the umbrella, alignment is automatic. Also due to the up to date ways of clamping, movement or rotation on the mast is impossible, a fact which leads to a difficulty for the entrepreneur (and owner of the box) to reorganize them on the beach for example for advertisement purposes or for better aesthetics.

Their placement with drilling screws, implies the need for special tools, electricity or batteries, a fact which increases both the time needed to place them and the labor costs for this reason. In the present implementation, there is no need for special equipment for placement, thus the above drawbacks do not exist.

They lock with the use of a mechanical lock and respective metallic key. This fact reduces safety due the familiar ease by which these simple mechanical locks can be broken into. Also the metallic key, which the beachgoer or user in general must carry with him at all times, is used in such a way which creates a delay in locking and unlocking of the box, or an annoyance in freedom of movement and this is due to the technology of mechanical keys which requires the user to remove the respective bracelet (if one exists) from the hand or foot and usually with the use of both hands to unlock and then lock and put on again.

In other implementations there is not a mechanical lock with a key but a lock with a combination code of three of four castors. With this, there is not the problem with the key on the one hand but the problem of memorizing the code by the user and lengthy procedure needed by the person in charge to change the code for each temporary user of the umbrella. As a result the user-bather cannot enjoy his relaxation and recreation, the main and only reason he has come to such a facility. Furthermore the entrepreneur spends valuable time for its proper operation. In the present implementation all the previous problems are eliminated, due to the electronic technology and also due to the way in which the bracelet- key works.

The entrepreneur who has the control of tens - hundreds of such boxes also has many lost or stolen keys during one season. Today this fact creates many organizational and cost problems for a business which has installed many safety boxes with mechanical keys, given that in each such case the backup key must be used which this also has a limit since each lock has up to 2 keys or (after the loss of the second key) the lock must be changed, thus cost and time for the entrepreneur and a hassle for the user/bather. This also creates a problem, because in the case of a change of the lock, the new lock installed must use the same master key, as all the other locks of the specific facility. This fact leads to the need for reserve locks (thus cost) which share the same design master key.

The source of this problem lies clearly in currently existing technology which imposes applied engineering and simply cannot be solved due to the limitations of applied engineering in the field of mechanical locks. The present implementation excels greatly due to the use of digital technology hence all the above described problems are nullified and those in control of the recreational facility with rented umbrellas are forever rid of the various types of problems created by the loss of classic metallic keys and mechanical locks.

This invention presents many advantages both to the entrepreneurs and end users and also manages to create the infrastructure for an increase in profits and reduction of organizational problems for the entrepreneur and true moments of relaxation and security for the bathers. It is intended to cover the safekeeping of personal valuables of holiday makers in recreational areas such as beaches, hotels, beach-bars etc. in such a way that it will not only solve the problems of the recipients but also not to create new ones.

The three important criteria for the existence of this invention are security, simplicity and ease of use but also ease of control and programming it and the absolute relaxation of the customer-user. It is aimed at any interested party but mainly for professionals in the tourist sector. The advantages which it offers to professionals but also to end users are many creating in such a way an infrastructure for the increase in profits and reduction of organizational problems for the former and true moments of relaxation and security for the latter The invention is defined by a safety box system according to claim

The safety box can be made of a special polymer plastic with UV protection. This material, in contrast to other material, is not subject to ageing due to UV solar radiation, its color is not distorted nor is its elasticity minimized. Elasticity is conducive to security in that it helps in damping impact forces. As in the case of vandalism where this elasticity does not permit the breaking of the material, thus avoiding the theft of valuables.

The safety box has a triangular shape. Its triangular shape creates five sides which make it conducive (in comparison with the six usual sides of a parallelogram box) to the increase in rigidity and further increase in security which it affords to the customer. It has ventilation holes to avoid odors and at the same time the holes serve as drains for internal humidity or chance liquids unintentionally found internally, such as beverages.

Due to the triangular shape two of the five sides have a triangular shape. One of the two sides acts as the door which reveals the interior of the box. The triangular shape makes it less flexible than the usual parallelogram shape which enhances the security of the box.

Due to the triangular shape it is impossible to place objects on top of the box such as cigarettes, drinks, coffee which usually negatively distort the exterior appearance of the material. The indirect effect is the maintenance of a good aesthetic appearance over time and the pleasant visual acceptance by the customer-user in comparison with other products which have become distorted due to the above factors.

The internal space which is created due to the triangular layout and its design gives a very good exploitation of the space and at the same time a large capacity (six liters of usable volume) for valuables, giving also the customer the capability of storing even unthinkable up to today items such as coffee and soft drinks.

Due to the triangular shape but also to the way the door opens, the internal area is not exposed to plain view. This fact improves security because it manages to hide the user's valuables from prying eyes during the time the box is open.

The safety box operates with an electronic lock found internally on the triangular door. It is powered by four AA type batteries. In case of low battery power, it emits a beep warning for the timely replacement of the batteries. In the very likely event that the beep is ignored and the batteries completely die, there is an external emergency power supply.

Its electronic lock in combination with the electronic key-bracelet have as a result speed, safety, ease of use, organizational ease and convenience which is unprecedented in comparison with all other competitive products. The user can unlock the safety box by wearing the electronic key-bracelet on his hand and simply bringing it near the electronic reader found on the door. The door immediately opens automatically due to the assistance of a spring and with a simultaneous beep. The unlocking procedure may be done with the user having objects in both hands, in comparison with other products where both hands are needed for the procedure. The time needed for the unlocking procedure is limited to one second. The closing and simultaneous locking of the door is done by simply pushing with the hand enough to overcome the minimum spring force and it is instantaneous.

The existence of the spring, on the one hand, is conducive to the automatic opening of the door and on the other hand, holds the door in a permanent open position allowing for the placing and removing of items without requiring both hands (one to hold the door in an open position). If the spring did not exist, as is the usual in most competitive products, either due to wind or due to the absolute vertical mounting on the mast with the ground, the door on many occasions would tend to close resulting in the use of one hand to keep it open and the other to place and remove valuables from the box. A fact which does not contribute to the relaxation of the bather.

A plastic elastic spiral shaped bracelet which contains the plastic case with the built-in electronic key constitutes the electronic key. It is worn around the wrist or ankle. It is fully waterproof and is not affected by any type of lotion or chemicals. Rear advertising surface : a supplemental plastic cover covers the mechanical clamping device (base) of the box with the mast and thus creates a pleasant image from the rear view of the reverse side of the box. An advantage which comes from this implementation is one more advertising surface, which added to the other five surfaces of the box, creates a major infrastructure to host advertisements and gain revenue for the entrepreneur.

The mounting of the box onto the mast is carried out with the help of plastic clamps which make up the base of the box. The design of the base allows for the mounting of the box onto any diameter umbrella mast between 25mm to 100mm and without the need to make holes in the mast, which is almost a rule in respective products causing wear to the property of the entrepreneur. Also the fitting is carried out with only one simple tool and by any unqualified personnel.

The base support of the box and the main safety box are connected with two long protrusions, designed in such a way so that the box can be dismounted from the base in just a few seconds without the need for tools, thus giving the person in charge of the organized beach or respective business the capability of dismounting and mounting the safety boxes in just a few seconds. For example, to avoid theft of the boxes during the night. Also during the winter storage it is not necessary to dismantle the base of the box from the mast of the umbrella, thus giving the person in charge of the facility the capability of remounting the boxes very quickly and without the need of tools the following summer period.

The combination of the electronic lock and the electronic key-bracelet create for the person in charge of the recreational facility unimaginable conveniences in organization and control compared to the present situation. In the event of the loss of a user key-bracelet (user- the end user of the safety box), the person in charge is able in less than 10 seconds with the use of a special electronic key-bracelet (master-the person in charge and control of many safety boxes) to delete the lost key and reregister a new one. This can be repeated unlimited times. In the event of the loss of the electronic key-bracelet (master), the person in charge with the use of an electronic key-bracelet (system) is able to delete it and reregister a new one. This can be repeated unlimited times. Thus the control of the electronic key-bracelets is no longer a difficult issue to solve, as with the metallic keys of other products and is no longer an inhibitory factor for the placing of safety boxes at a recreational facility, especially when it is quite large in size with many umbrellas.

This invention is innovative in its discoveries in several areas which are analyzed in a logical order referring to a preferred embodiment shown in the respective figures.

Figure (1): A safety box with an electronic lock where (1) is the main body of the box, (2) is the door, (3) is the electronic lock, (4) is the plastic hook in which the lock locks, (5) are the three plastic rotating hinges of the door, (6) is the spring assisting in the automatic opening of the door, (7) the supplemental cover of the back side, (8) the metallic latch of the electronic lock and (9) the electronic reader.

With the instant contact of the front surface of the electronic key-bracelet to the electronic reader (9), the command is given to the electronic lock (3) to activate. For that second the mechanical connection between the lock and the main body ceases (4) and the door is released. The permanent tension of the spring (6) on the door (2) pushes it to rotate on its axis resulting in the automatic opening of the door. Besides its practicality, another purpose of the spring is for security. If implemented without the spring, the door might not be sufficiently pushed by the user, thus partially closing and the lock would not perfectly line up with the plastic hook (4). From afar and especially form different visual angles, besides the front side, the safety box would appear closed, but not locked. Inevitably the valuables inside would be exposed and not secure.

The above function is analyzed as follows: The electronic key-lock in the case (27) contains HF-RFID microcircuit technology.

Its instant contact with the electronic reader (9) activates the microcircuit with an electrical current which is developed from the electromagnetic field which is induced by the electronic reader. The microcircuit transmits in turn to the electronic reader its digital identity and through this to the memory of the electronic lock (3). If the digital identity is registered in its memory then the lock unlocks and the door opens. If not, a prolonged beep informs that this particular key-bracelet is not valid and the lock is not activated so as to unlock the door.

The electronic key-bracelets, depending on their programming, have three different roles. The role of the user (the end user who uses it to unlock the safety box), the role of master (the person in charge of registering - deleting user for any lock and also the right to open all the locks which correspond to him), and the role of system, which registers and deletes master keys.

In the event of loss, deliberately or not, of the electronic user key-bracelet (which is daily at an organized beach with many umbrellas) the master key-bracelet is able, with a simple procedure lasting just a few seconds, to delete the lost electronic key-bracelet from the memory of the electronic lock and to reregister a new one or the lost one in case it is found.

The HF-RFID (high frequency - radio frequency identification) technology creates a channel of communication between the electronic key-bracelet and the electronic lock through the electronic reader (9), which is absolutely secure due to its digital encoding, violation is impossible and thus makes the safety box absolutely secure. The electronic lock (3) is placed inside the door with four self-perforating type screws. It is connected to the electronic reader (9) with a wire that is fed through the plastic body of the door (2). Its operation is based on a small micro motor which controls the vertical movement of the metallic latch (8). This happens only at the moment the lock unlocks (with a simultaneous beep), after having first received the command from the valid electronic key-bracelet.

Specifically the metallic latch (8) enters the body of the lock (3), remains there for one second and then exits automatically to its original position. Simultaneously with the upward movement of the latch, the door opens automatically with the help of the spring (6). After the lapse of the one second timing, though the latch has extended downwardly, but due to a mechanism internally in the lock, it is possible to have upward compression without the use of micromotor movement. This compression, caused during the closing of the door and from the impact of the metallic latch (8) with the plastic hook (4) resulting in the instantaneously forced infiltration internally in the lock until the moment the door (2) adjoins the box (1) and so the metallic latch (8) exits the body of the electronic lock (3) and latches the plastic hook (4) so that the door is then considered locked. This results in a locked door only by lightly being pushed by the user without the use of the electronic key-bracelet.

The batteries guarantee the uninterrupted operation of the lock for about 15000 activations. When the batteries weaken, there is a warning beep which notifies the user. Despite this fact, the electronic reader (9) has a built-in small socket which can be connected to an external battery pack (not pictured in the figures) to activate the lock in case the warning beep is ignored and thus there is total loss of battery power. Figure (2): Plan of the safety box. This view reveals the mechanism and the way the safety box is hinged onto the mast of the umbrella

One can discern the internal components of the base (10), the external components of the base (11), the two screws (12) and (13), the screw nuts (14) and the two pairs (15) and (16) of sockets for the nuts (14). All the above components make up the support base of the box (1) on any mast. The two plastic components (10) and (11) through the included angles they form due to their design, surround any mast and by tightening the screws, the hinging of the box to the mast is achieved and stabilized. The allowed cross-section mast which can be entered between the plastic components is between 25mm and 100mm. The two screws are used for greater effectiveness in tightening the mast between (10) and (11). If the cross-section of the mast is up to 60mm then the pair (12) of screws and corresponding nuts (14) and pair of sockets (16) are used, whereas if the mast has a diameter greater than 60mm than the pair of screws (13) and corresponding nuts (14) with pair of sockets (15) is used. What is achieved with the different pairs according to the diameter of the mast is the increased tightening torque which can be applied to each screw. If for example we place the base system on a 30mm mast and drive the screws through the (15) pair of sockets, then the intelligible center of the mast there will be a certain distance (a) on each side, from the screws. On the other hand if we drive the screws through the (16) pair of sockets then the intelligible center of the mast on each side will be a much smaller distance than (a). This distance balances the bending force exerted on the centers of (10) and (11) through the mast which is found between them from the torque exerted by the screws on sockets (15) and (16). The smaller the distance, is, the less the bending force, thus the tightening torque can be increased on the screws resulting in a more sturdy attachment of the base and thus also the box (1) onto the mast.

Figure (3): The components of the base (10) and (11) in combination with the screws and nuts make up the support base of the main box (1) onto the mast. The complete design was made with the reasoning of a detachable base-box, resulting in the speedy coupling and uncoupling of the box. This gives the capability to whoever is mounting the safety boxes onto the mast to do it quickly, since first the support base will be tightened onto the mast and then the box will be hung on the base. The component (10) has two protrusions (19) in an upside down L shape which enter into the parallelogram shaped holes (17). The person in charge of placing the boxes, holding the box (1) in his hands and after tightening the base onto the mast, pushes the box horizontally towards the base until the component (10) adjoins the box (1). At the same time the protrusions (19) have entered the parallelogram shaped holes (17). Then with vertical pressure downwards of the box (1) the fastening of the box on to the base is achieved by the protrusions (19) entering the parallelogram shaped holes (17). As a result of this layout, the box (1) can only be removed from the base by simultaneously pressing the protrusions (18) backwards while at the same time pushing the box (1) vertically upwards so that the protrusions (19) are aligned with the parallelograms (17) and then with the horizontal movement of the box to finally remove it from the base and thus the mast. The described procedure can only be done with the door (2) in an open position. When the door (2) of the box (1) is closed and locked, it is impossible to reach the protrusions (18) thus impossible to remove it from the base and mast.

Figure (4): The design of the safety box also includes a mechanism against deliberate vandalism. The usual phenomenon would be an effort to break into it with some metal object (screwdriver) so as to break the door away from the main body. The point of intrusion of the metal object is exactly at the edge which is formed from the door (2) and the main body (1) when the door is shut. With the pressure exerted, the result would be the opening of the edge and removal of the door from the main body of the box or (with an angular infiltration) one of the two surfaces, either the door or the front curved surface to be raised resulting in the beginning of the breaking into the box. The design includes nine small length plastic protrusions (21) which are built-into the door (2) of the box (1). These protrusions when the door closes and is adjoined to the main body (1) penetrate under the rim (20) which protrudes from the main body (1). This rim penetrates below the perimeter (22) of the door and above the plastic protrusions (21), thus the rim (20) is enclosed between the perimeter (22) of the door and plastic protrusions (21). As a first result, the vertical penetration of some metal object is impeded due to the existence of the rim (20). Also the collapse from exerted force with a direction of external towards internal of the front curved surface of the box (1) is impossible due to the resistance shown by the plastic protrusions (21) on the rim (20).

Figure (5): Rear detachable side (cover) (7) of the box. Its mechanical attachment to the box is possible through the use of four protrusions (23), (two on each side) in combination with its four corresponding notches (26) on the back of the box (two on each side). By sliding downwards and after first inserting the protrusions (23) into the notches (26), the tightening of the plastic cover (7) to the box (1) is achieved. Between the protrusions (23) there is a smaller protrusion (24). As the cover slides downward and is fit into its final position, at the same time the protrusions (24) (one on each side) enters the notches (25) resulting in the hindering of upward movement of the cover (7) and thus the dismantling and removal of the box (1). In this way, its aimless removal by someone for no apparent reason is inhibited. The existence of the rear cover, on the one hand, serves as a cover for the support mechanism of the box onto the mast of the umbrella for reasons of aesthetic quality and on the other hand, it creates one more advertising surface on the back side.

Figure (6): Six advertising surfaces. The design of the box was made with the criteria of safety, capacity, aesthetic quality but also advertising. Its advertising surfaces (a through z) are able to host logos, images, menus, tourist information and anything else with the purpose of advertising or informing the customer. Thus, in total, the box has six advertising surfaces with the innovation of the back surface which together with the rest of the surfaces can project any message at a 360 degree optical range. The safety box thus also plays the role of an advertising-information carrier.

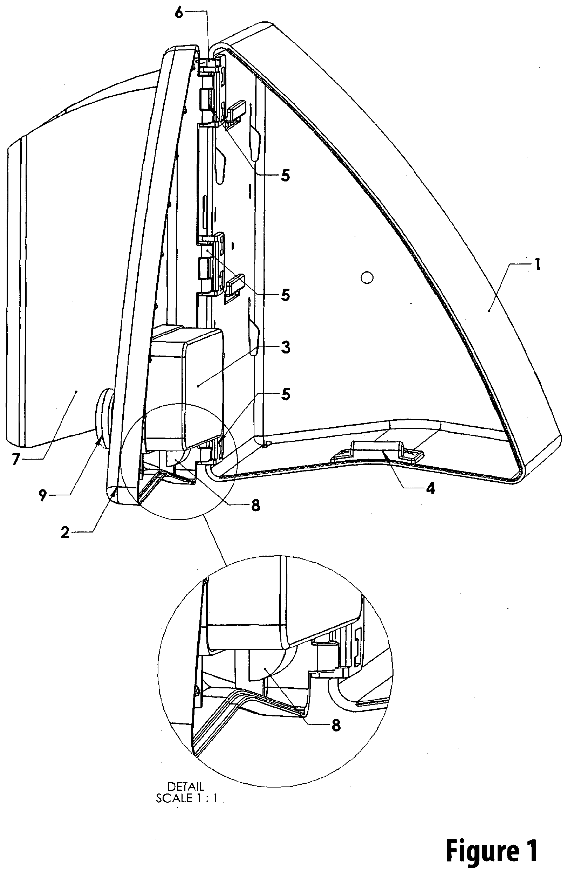

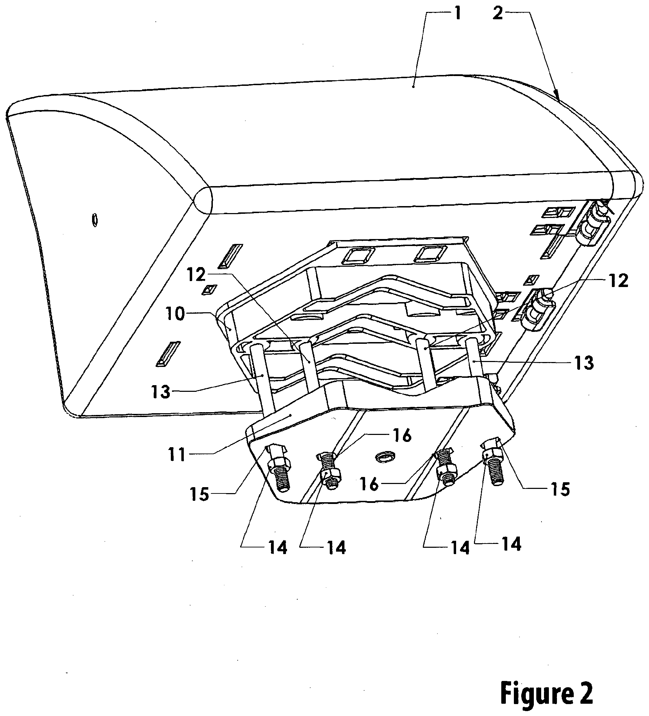

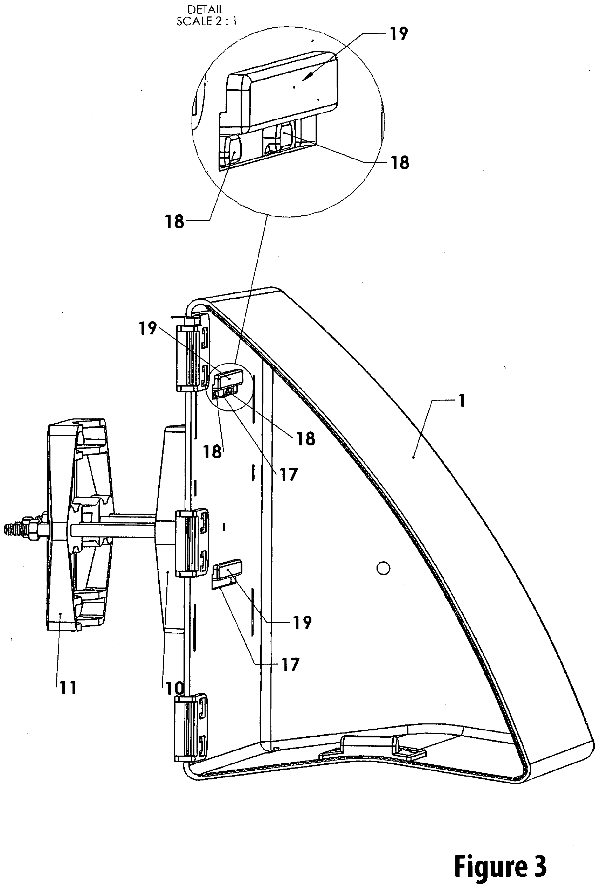

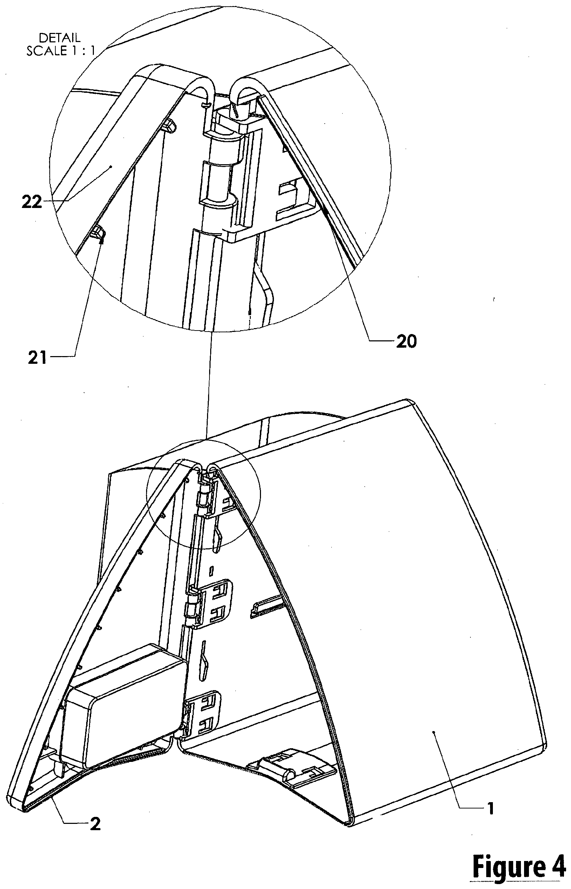

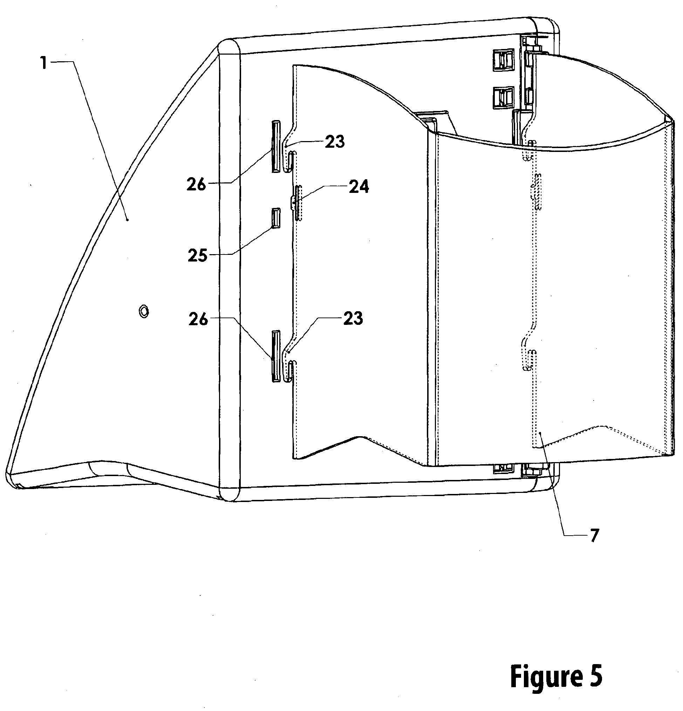

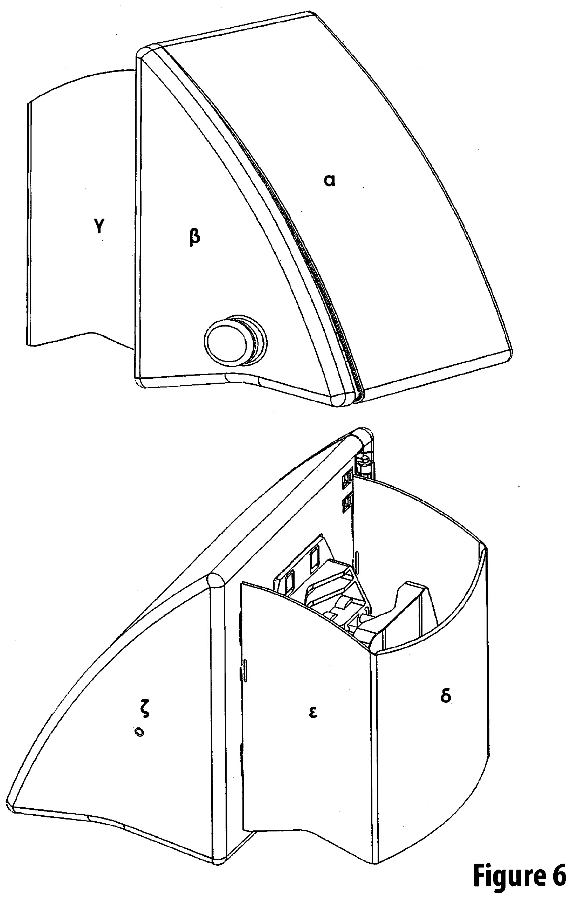

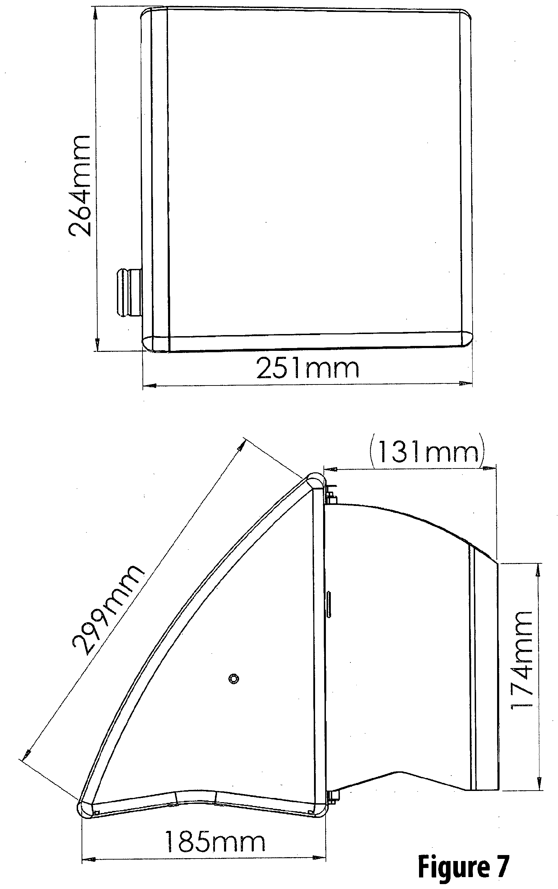

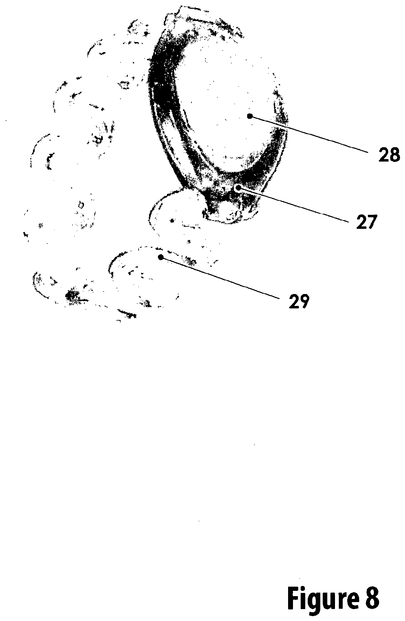

Figure (7): The size of the safety box serves mainly to allow for ease of placement, in the matter of volume, of valuables and non-valuable items that the user wants to store temporarily. Its capacity, which totals six liters of usable volume, allows it to receive even the largest size tablets in production today (up to 11 inches). Having as a given any future developments, the safety box, with small changes to some or even all of its dimensions will be able to hold larger items (valuables or not). The increase in dimensions unilaterally or entirely will be designed in such a way as to not affect the harmony of the design nor its functionality and mainly its triangular appearance. In the figure (7) the dimensions of the safety box are illustrated.

Figure (8): Electronic key-bracelet. It is made up of plastic in the shape of a circular meander (29) which has great mechanical endurance and elasticity so as to be worn on any size wrist. At the edge of the plastic, the plastic case (27) which holds the microcircuit (28) is fit. It is fully waterproof and completely resistant to solar radiation. Depending on the programming, it can belong to one of three categories.

A- Category user. It is the category which on a daily basis will lock and unlock the electronic lock. Bathers, holiday-makers etc. belong to this category. B- Category master. Whoever is in charge of operating the safety boxes is in this category. This category is able to unlock all the boxes as well as delete and reregister electronic key-bracelets from the user category. C - Category system. Whoever has the supervision of the business where the safety boxes are found is in this category. This category has the ability to delete - reregister electronic key-bracelets in the category B-master.

## Claims

1. A safety box system, for the temporary storage of valuables and being capable to be installed on a mast, comprising:
a support base comprising a first plastic component (10) and a second plastic component (11), wherein the support base is removable and detachable;
a safety box made up of plastic and having a triangular shape, comprising:
a main body (1) comprising five sides wherein two of the five sides have a triangular shape, and wherein one of the two triangular sides acts as a door (2);
an electronic lock (3) and an electronic key-bracelet (27-29);
a rear detachable cover (7), for covering the support base and at least a portion of the mast when the safety box is mounted on the mast, wherein the rear detachable cover comprises an advertising surface;
wherein the safety box is mounted on the first component of the support base, the support base being configured to be attachable onto the mast by the second component of the support base, wherein the safety box is detachably connected to the first component with two long protrusions and the first and second
components are attachable to the mast by clamping;
wherein the safety box is adapted to be opened through automatic opening of the door with the help of a spring (6) after unlocking the electronic lock (3) with the
electronic key-bracelet (27-29); and
wherein the safety box further comprises an anti-vandalism mechanism offering protection against violation of the door by fitting a protruding rim (20) of the main body of the safety box between small length protrusions (21) built into the door of the safety box and a perimeter (22) of the door.

2. The safety box system of claim 1, wherein the first component of the support base comprises a plurality of first plastic protrusions (18) and second plastic protrusions (19), entering, during mounting of the safety box on the support base, into parallelogram shaped holes (17) included on a back side of the main body of the safety box, wherein the second plastic protrusions (19) have an upside down L shape, wherein the back side of the main body of the safety box is not a triangular side and is attached on the first component of the support base.

3. The safety box system according to claim 2, wherein the safety box is removable from the first component of the support base by simultaneously pressing the first plastic protrusions (18) backwards while at the same time pushing the safety box vertically upwards so that the second protrusions (19) are aligned with the parallelogram shaped holes (17) and then with a horizontal movement, the safety box is removable from the first component of the support base and thus the mast.

4. The safety box system according to claim 1, wherein the electronic lock (3) includes a micromotor for the movement of a latch (8), an automatic reset capability, simultaneous warning beeps and a capability to delete- register and or reregister electronic key-bracelets.

5. The safety box system according to claim 4, wherein the electronic key-bracelet (27-29) comprises a built-in HF-RFID microcircuit in a waterproof plastic case (27).

## Patentansprüche

1. Sicherheitskastensystem zur vorübergehenden Aufbewahrung von Wertgegenständen, das an einem Mast installiert werden kann, umfassend:
eine Trägerbasis, die eine erste Kunststoffkomponente (10) und eine zweite Kunststoffkomponente (11) umfasst, wobei die Trägerbasis entfernbar und abnehmbar ist
eine Sicherheitsbox, die aus Kunststoff hergestellt ist und eine dreieckige Form aufweist, umfassend:
einen Hauptkörper (1), der fünf Seiten umfasst, wobei zwei der fünf Seiten eine dreieckige Form aufweisen, und wobei eine der beiden dreieckigen Seiten als Tür (2) wirkt;
ein elektronisches Schloss (3) und ein elektronisches Schlüsselarmband (27-29);
eine hintere abnehmbare Abdeckung (7) zum Abdecken der Trägerbasis und mindestens eines Teils des Mastes, wenn die Sicherheitsbox an dem Mast montiert ist, wobei die hintere abnehmbare Abdeckung eine Werbefläche umfasst;
wobei die Sicherheitsbox an der ersten Komponente der Trägerbasis montiert ist, wobei die Trägerbasis konfiguriert ist, um durch die zweite Komponente der Trägerbasis an den Mast anbringbar zu sein, wobei die Sicherheitsbox mit zwei langen Vorsprüngen abnehmbar mit der ersten Komponente verbunden ist und die erste und zweite Komponente durch Klemmen an den Mast anbringbar sind;
wobei die Sicherheitsbox durch automatisches Öffnen der Tür mit Hilfe einer Feder (6) nach Entsperren des elektronischen Schlosses (3) mit dem elektronischen Schlüsselarmband (27-29) geöffnet werden kann; und
wobei der Sicherheitsbox ferner einen Anti-Vandalismus-Mechanismus umfasst, der einen Schutz gegen eine Beschädigung der Tür bietet, indem ein vorstehender Rand (20) des Hauptkörpers der Sicherheitsbox zwischen kleinen Längenvorsprüngen (21), die in die Tür der Sicherheitsbox eingebaut sind, und einem Umfang (22) der Tür angebracht wird.

2. Sicherheitskastensystem gemäß Anspruch 1, wobei die erste Komponente der Trägerbasis eine Mehrzahl von ersten Kunststoffvorsprüngen (18) und zweiten Kunststoffvorsprüngen (19) umfasst, die während der Montage der Sicherheitsbox auf der Trägerbasis in parallelogrammförmige Löcher (17) eindringen, die auf einer Seite des Hauptkörpers der Sicherheitsbox enthalten sind, wobei die zweiten Kunststoffvorsprünge (19) eine umgekehrte L-Form aufweisen, wobei die Rückseite des Hauptkörpers der Sicherheitsbox keine Dreiecksseite ist und an der ersten Komponente der Trägerbasis angebracht ist.

3. Sicherheitskastensystem gemäß Anspruch 2, wobei die Sicherheitsbox von der ersten Komponente der Trägerbasis entfernt werden kann, indem die ersten Kunststoffvorsprünge (18) gleichzeitig nach hinten gedrückt werden, während die Sicherheitsbox gleichzeitig vertikal nach oben geschoben wird, so dass die zweiten Vorsprünge (19) mit den parallelogrammförmigen Löchern (17) ausgerichtet werden, und dann mit einer horizontalen Bewegung die Sicherheitsbox von der ersten Komponente der Trägerbasis und damit dem Mast entfernt wird.

4. Sicherheitskastensystem gemäß Anspruch 1, wobei das elektronische Schloss (3) einen Mikromotor für die Bewegung eines Riegels (8), eine automatische Rückstellfähigkeit, gleichzeitige Warntöne und eine Fähigkeit, elektronische Schlüsselarmbänder zu löschen, zu registrieren und/oder neu zu registrieren, enthält.

5. Sicherheitskastensystem gemäß Anspruch 4, wobei das elektronische Schlüsselarmband (27-29) einen eingebauten HF-RFID-Mikroschaltkreis in einem wasserdichten Kunststoffgehäuse (27) umfasst.

## Revendications

1. Un système de boîte de sécurité, pour le stockage temporaire d'objets de valeur et pouvant être installé sur un mât, comprenant :
une base de support comprenant un premier composant (10) en matière plastique et un deuxième composant (11) en matière plastique, la base de support étant amovible et détachable ;
une boîte de sécurité faite en matière plastique et ayant une forme triangulaire, comprenant :
un corps principal (1) comprenant cinq côtés, deux des cinq côtés ayant une forme triangulaire, et l'un des deux côtés triangulaires agissant en tant que porte (2) ;
une serrure électronique (3) et un bracelet-clé électronique (27-29) ;
un couvercle arrière détachable (7), pour recouvrir la base de support et au moins une partie du mât lorsque la boîte de sécurité est montée sur le mât, le couvercle arrière détachable comprenant une surface publicitaire ;
la boîte de sécurité étant montée sur le premier composant de la base de support, la base de support étant configurée de façon à être fixée sur le mât par le deuxième composant de la base de support, la boîte de sécurité étant reliée de manière amovible au premier composant avec deux longues saillies et les premier et deuxième composants étant aptes à être fixés au mât par serrage ;
la boîte de sécurité étant adaptée pour être ouverte par ouverture automatique de la porte à l'aide d'un ressort (6) après déverrouillage de la serrure électronique (3) au moyen du bracelet-clé électronique (27-29) ; et
la boîte de sécurité comprenant en outre un mécanisme anti-vandalisme offrant une protection contre la violation de la porte en engageant un rebord saillant (20) du corps principal de la boîte de sécurité entre des saillies de petite longueur (21) intégrées dans la porte de la boîte de sécurité et un périmètre (22) de la porte.

2. Le système de boîte de sécurité selon la revendication 1, dans lequel le premier composant de la base de support comprend une pluralité de premières saillies (18) en matière plastique et de deuxièmes saillies (19) en matière plastique, entrant, lors du montage de la boîte de sécurité sur la base de support, dans trous (17) en forme de parallélogramme inclus sur une face arrière du corps principal de la boîte de sécurité, les deuxièmes saillies (19) en matière plastique ayant une forme en L à l'envers, le côté arrière du corps principal de la boîte de sécurité n'étant pas un côté triangulaire et étant fixé sur le premier composant de la base de support.

3. Le système de boîte de sécurité selon la revendication 2, dans lequel la boîte de sécurité est amovible par rapport au premier composant de la base de support en appuyant simultanément sur les premières saillies (18) en matière plastique vers l'arrière tout en poussant la boîte de sécurité verticalement vers le haut de sorte que les deuxièmes saillies (19) sont alignées avec les trous (17) en forme de parallélogramme, puis, avec un mouvement horizontal, la boîte de sécurité est amovible par rapport au premier composant de la base de support et donc du mât.

4. Le système de boîte de sécurité selon la revendication 1, dans lequel la serrure électronique (3) comprend un micromoteur pour le mouvement d'un verrou (8), une capacité de réinitialisation automatique, des bips d'avertissement simultanés et une capacité de suppression-enregistrement et / ou de réenregistrement de bracelets-clés électroniques.

5. Le système de boîte de sécurité selon la revendication 4, dans lequel le bracelet-clé électronique (27-29) comprend un microcircuit HF-RFID intégré dans un boîtier (27) en matière plastique étanche.
